# EUROPÄISCHE PATENTSCHRIFT

(11) **EP 1 219 801 B1**
(45) Veröffentlichungstag und Bekanntmachung des Hinweises auf die Patenterteilung: **21.10.2009**
(21) Anmeldenummer: 01128786.9
(22) Anmeldetag: 04.12.2001
(51) Int. Cl.: F02C 3/36, F02C 6/00, F02K 3/065

(54) **Gasturbinenanlage**
Gas turbine power plant
Installation de turbine à gaz

(30) Priorität: 22.12.2000 DE 10064263
(43) Veröffentlichungstag der Anmeldung: 03.07.2002
(73) Patentinhaber: Alstom Technology Ltd, 5400 Baden (CH)
(72) Erfinder: Liebig, Erhard, Dr., 79725 Laufenburg (DE); Ulrich, Roland, 79761 Tiengen (DE); Vollmer, Michael, 5413 Birmenstorf (CH)

(56) Entgegenhaltungen:
- DE-A1- 2 832 082
- GB-A- 1 557 817
- US-A- 3 979 903
- US-A- 5 775 092

## Beschreibung

### Technisches Anwendungsgebiet

Die vorliegende Erfindung betrifft eine Gasturbinenanlage mit mindestens einem Ansaugkanal, einem Verdichter, einer Brennkammer, einer Gasturbine, einem Abgaskanal, der sich direkt oder über Zwischenelemente an die Gasturbine anschliesst sowie einem Generator zur Stromerzeugung, wobei in dem Ansaugkanal des Verdichters oder in einem Bypasskanal zu dem Ansaugkanal eine erste Booster-Stufe angeordnet ist, sowie ein Verfahren für eine optimierte Betriebsweise einer derartigen Gasturbinenanlage.

Die vorliegende Gasturbinenanlage eignet sich vor allem zur Energieerzeugung unter der Bedingung des Einsatzes verschiedener Brennstoffe, bei wechselnden Umgebungsbedingungen sowie besonderen Netzanforderungen.

### Stand der Technik

Aus der US 3,979,903 ist eine Gasturbine bekannt, bei der im Ansaugkanal des Verdichters ein Booster-Gebläse angeordnet ist. Dieses Booster-Gebläse wird mit annähernd konstanter Leistung über eine separate Turbine angetrieben und ermöglicht unter anderem eine Leistungssteigerung der Gasturbinenanlage.

Es ist auch bekannt, ein oder mehrere derartige Booster-Gebläse im Ansaugkanal des Verdichters von Gasturbinenanlagen einzusetzen. Diese so genannten Air-Intake-Booster führen über eine Erhöhung des Luftmassenstromes zu einer Leistungssteigerung der Gasturbinenanlage. Sie werden daher in Spitzenlastzeiten oder bei Notwendigkeit der Bereitstellung einer zusätzlichen Reserveleistung usw. eingesetzt. Weiterhin können durch den Betrieb dieser Booster-Gebläse jahreszeitliche, standort- und klimatisch bedingte Einflüsse auf die Leistung der Gasturbinenanlage ausgeglichen werden.

Eine weitere Möglichkeit zur Leistungssteigerung einer Gasturbinenanlage besteht in der Anordnung von einem oder mehreren Booster-Gebläsen im Abgaskanal der Turbine. Diese so genannten Exhaust-Gas-Booster führen zu einer Absenkung des Druckes im Abgaskanal und somit zu einer Vergrößerung des Expansionsgefälles der aus der Turbine austretenden Heissgase. Die Vergrößerung des Expansionsgefälles resultiert wiederum in einer Leistungssteigerung der Gasturbinenanlage. Die Booster-Gebläse im Abgaskanal können, wie auch die Air-Intake-Booster, in Spitzenlastzeiten sowie bei Notwendigkeit der Bereitstellung einer zusätzlichen Reserveleistung zugeschaltet werden. Sie können ebenso zum Ausgleich jahreszeitlich, standort- und klimatisch bedingter Einflüsse auf die Leistung der Gasturbinenanlage eingesetzt werden.

### Darstellung der Erfindung

Die Aufgabe der vorliegenden Erfindung besteht darin, eine Gasturbinenanlage sowie ein Betriebsverfahren für die Gasturbinenanlage anzugeben, die eine gegenüber dem Stand der Technik verbesserte sowie eine hinsichtlich klimatischer, standortbedingter und auslegungsseitiger Einflüsse, wechselnden Brennstoffen und unterschiedlichen Netzanforderungen optimierte und anlagenschonende Fahrweise ermöglichen.

Die Aufgabe wird mit der Gasturbinenanlage sowie dem Verfahren gemäß den Patentansprüchen 1 bzw. 7 gelöst. Vorteilhafte Ausgestaltungen der Gasturbinenanlage sowie des Verfahrens sind Gegenstand der Unteransprüche.

Die vorliegende Gasturbinenanlage, die in bekannter Weise mindestens einen Ansaugkanal, einen Verdichter, eine Brennkammer, eine Gasturbine, einen Abgaskanal, der sich direkt oder über Zwischenelemente an die Gasturbine anschliesst sowie einen Generator zur Stromerzeugung umfasst, ausgestaltet ist, weist eine erste Booster-Stufe auf, die im Ansaugkanal des Verdichters angeordnet ist. Die Gasturbinenanlage weist weiterhin eine zweite Booster-Stufe auf, die im Abgaskanal angeordnet ist.

Die erste Booster-Stufe und/oder die zweite Booster-Stufe können auch in bereits vorhandenen aber auch zusätzlich zu installierenden Bypasskanälen zu dem jeweiligen Ansaugkanal bzw. Abgaskanal angeordnet sein.

Bisher war der Einsatz derartiger Booster-Stufen entsprechend der konkreten Anforderungen der jeweiligen Gasturbinenanlage jeweils nur entweder im Ansaugkanal oder im Abgaskanal bekannt, um die dortigen Druckbedingungen anzupassen. Die Erfinder der vorliegenden Gasturbinenanlage haben jedoch erkannt, dass durch den kombinierten Einsatz beider Booster-Stufen in einer Gasturbinenanlage eine optimierte Fahrweise dieser Gasturbinenanlage in einem sehr weiten Betriebsbereich ermöglicht wird.

Die erste Booster-Stufe und die zweite Booster-Stufe dienen zur Optimierung des gesamten Ansaugbereiches bis zum Eintritt der Ansaugluft in den Verdichter und des gesamten Abgasbereiches ab dem Austritt der Abgase aus der Gasturbine sowohl hinsichtlich der konstruktiven Ausführung als auch der Strömungstechnik.

Die erste Booster-Stufe und/oder die zweite Booster-Stufe können jeweils aus einem (grossen) oder mehreren (kleinen) Booster-Elementen aufgebaut sein. Die einzelnen Booster-Elemente einer jeweiligen Booster-Stufe können in Bezug auf die Ansaugluft bzw. das Abgas in Reihen- oder Parallelschaltung angeordnet sein. Die Anordnung der Booster-Elemente ist ferner unabhängig von Einbauten im Ansaugkanal (z. B. Luftfilter) und Abgaskanal (z. B. Lärmschutzeinbauten). Die Booster-Elemente einer Booster-Stufe können in Strömungsrichtung sowohl vor, nach als auch vor und nach einem Einbau angeordnet sein.

Vorzugsweise werden die Lüfter der Booster-Elemente durch drehzahlgeregelte Antriebe angetrieben. Durch eine geeignete Steuerung läßt sich auf diese Weise der Leistungsbedarf der ersten und zweiten Booster-Stufe minimieren. Um die Booster-Elemente auch bei Netzausfall für spezielle Aufgaben betreiben zu können, ist eine Auslegung der Antriebe der Booster-Elemente als Niederspannungsantriebe vorteilhaft.

Für einen wirtschaftlichen Betrieb der ersten und zweiten Booster-Stufe ist es ferner zweckmässig, die Lüfter der Booster-Elemente mit verstellbaren Lüfterblättern auszurüsten.

Da die Abgase der Gasturbine eine sehr hohe Temperatur aufweisen, ist es ferner zweckmässig die Abgaswärme vor Ableitung der Abgase in die Umgebung durch ein Wärmerückgewinnungssystem zu nutzen. Hierzu bieten sich insbesondere Abhitzekessel zur Warmwasser- oder Dampferzeugung an.

Mit dieser Bauweise wird eine Gasturbinenanlage realisiert, die sowohl so genannte Air-Intake-Booster als auch so genannte Exhaust-Gas-Booster aufweist. Gerade die Möglichkeit des Einsatzes beider Booster-Stufen entweder einzeln, d. h. in unterschiedlicher Reihenfolge, oder in Kombination, d.h. gleichzeitig mit möglicherweise unterschiedlicher Leistung, ermöglicht die Fahrweise der Gasturbinenanlage jeweils an sich verändernde Betriebsbedingungen optimal anzupassen. Sich verändernde Betriebsbedingungen ergeben sich beispielsweise in Abhängigkeit von den Umgebungsbedingungen, den Lastbedingungen der Gesamtanlage, dem eingesetzten Brennstoff sowie den Netzanforderungen.

Da sowohl der Air-Intake-Booster als auch der Exhaust-Gas-Booster zur Leistungssteigerung und auch zur Wirkungsgraderhöhung beitragen, sollten sich beide Booster-Stufen bei Normalbetrieb in Betrieb befinden. Dies gilt insbesondere dann, wenn auf Grund eines hohen Strom- bzw. Leistungsbedarfs im Netz hohe Stromvergütungen erzielt werden können. Das gleiche gilt, wenn kurzfristig Reserveleistung benötigt oder angeboten werden soll. Dies gilt aber beispielsweise auch für den Leistungsausgleich bei Einsatz eines qualitativ schlechteren Brennstoffes.

Kommt die Gasturbinenanlage zum Zwecke der Frequenzregelung, d.h. zur Regelung der jeweils landesüblichen Netzfrequenz, zum Einsatz, so bedeutet dies eine in hohem Maße oszillierende Fahrweise mit einer sehr hohen dynamischen Beanspruchung insbesondere der thermisch belasteten Bauteile des Heissgaspfades. Diese in einem kleinen Leistungsbereich oszillierende Leistungsabgabe wird nun von der ersten und/oder zweiten Booster-Stufe übernommen.

In Zeiten einer netzseitig zurückgehenden Last, d. h. in Zeiten mit sich verringernden Stromvergütungen, kann zuerst der eher weniger effiziente Exhaust-Gas-Booster ausser Betrieb genommen werden, gefolgt vom Air-Intake-Booster. In einem weiteren Schritt können die Vorleitreihen am Verdichter geschlossen und nach Ausschöpfung dieser Potentiale noch die Eintrittstemperatur in die Gasturbine abgesenkt werden.

Ein einzelner Betrieb einer jeweiligen Booster- Stufe bietet sich daher vorzugsweise im Bereich der Teillastfahrweise bzw. zur Erfüllung spezieller Anforderungen an. Beispielhaft seien hier die Verbesserung der Auftriebsbedingungen des aus dem Abgaskanal ausströmenden Abgases durch Einsatz des Exhaust-Gas-Boosters genannt. Ein Exhaust-Gas-Booster kann zum einen bei Reduzierung der Höhe des Abgaskanales analoge Auftriebsbedingungen im Vergleich zu einem deutlich höheren Abgaskanal sicher stellen. Der Betrieb des Exhaust-Gas-Boosters kann aber auch dazu beitragen, bei ungünstigen bzw. extremen Wetterlagen die Emissionsbedingungen zu verbessern.

Vor bzw. während dem Anfahren einer Gasturbinenanlage muss durch einen Spülvorgang des gesamten Systems sichergestellt sein, dass sich keinerlei brennbare Substanzen mehr im System befinden. Diese Spülvorgänge realisiert man üblicherweise durch Drehen des Wellenstranges. Mittels des Verdichters sind Strömungsbedingungen zu erreichen, bei welchen brennbare Substanzen aus dem System ausgeblasen werden. Zum Anfahren einer Gasturbinenanlage muss ferner der Wellenstrang vor dem Beginn der Befeuerung bis zu einer vorgeschriebenen Drehzahl beschleunigt werden. Eine weitere Beschleunigung ist erforderlich, um selbsttragende Betriebsbedingungen zu erreichen. Das Beschleunigen und das Drehen des Wellenstranges zu bzw. auf einer relativ hohen Drehzahl wird heute üblicherweise über einen Anfahrumrichter und einen Betrieb des Generators als Motor realisiert.

Durch einen Betrieb der ersten und/oder zweiten Booster-Stufe kann nun insbesondere im Zusammenhang mit dem Einsatz von Abhitzekesseln zur Dampferzeugung stromab der mindestens einen Gasturbine vor oder während dem Anfahren der Gasturbinenanlage ein effizienteres Spülen der Gasturbinenanlage und des Abgassystems erreicht werden.

Beispielsweise kann es zur Verkürzung der Revisionszeiten von Gasturbinenanlage zweckmässig sein, diese möglicherweise bereits während insbesondere aber nach dem Abfahren zusätzlich zu kühlen. Dieses zusätzliche Kühlen auch "Forced Cooling" genannt realisiert man üblicherweise wiederum, indem man über den Anfahrumrichter und den Generatur die Welle dreht und mittels des Verdichters die Gasturbinenanlage mit kalter Luft durchströmt. Die gleiche Aufgabe kann nun mittels der ersten und/oder zweiten Booster-Stufe realisiert werden.

Der Betrieb der Booster-Stufen kann auch während des Anfahrens, während Leistungssteigerungen bzw. während des Normalbetriebes dazu beitragen, die Gasturbinenanlage schonender zu fahren bzw. grössere Leistungsgradienten zu realisieren. So ist es während des Anfahrens bzw. bei Leistungssteigerungen unter Einbeziehen der ersten und/oder zweiten Booster-Stufe möglich, einen grösseren Leistungsgradienten zu realisieren bzw. bei gleichem Leistungsgradienten und damit verringerter Feuerungsleistung die Anlage schonender zu betreiben. Auch bei stationärem Betrieb ist es in Abhängigkeit der konkreten Bedingungen möglich, bei Realisierung einer vergleichbaren Anlagenleistung, die Feuerungsleistung der Gasturbinenanlage zu vermindern, damit die oberen Prozesstemperaturen abzusenken, um somit insbesondere die thermische Belastung der Bauteile zu verringern.

Die beispielhaft beschriebenen Auslegungsmöglichkeiten und Betriebsweisen zeigen, dass durch die Summe der Massnahmen und ihre Kombination ein weiter Bereich an Möglichkeiten für die Auslegung und die Optimierung der Betriebsweise einer Gasturbinen- oder Kombianlage unter den jeweils vorliegenden Betriebsbedingungen zur Verfügung steht.

Selbstverständlich ist die Ausrüstung von Gasturbinen- oder Kombianlagen mit Air-Intakte-Boostern und Exhaust-Gas-Boostern nicht auf Neuanlagen beschränkt. Diese Booster können auch bei bestehenden Anlagen zur Kompensation beispielsweise von Alterungseffekten nachgerüstet werden. Sie können aber auch zur Leistungs- und Wirkungsgradsteigerung, zur Anpassung der Leistung an die Bedarfsstruktur oder dergleichen Einsatz finden.

### Kurze Beschreibung der Zeichnungen

Die vorliegende Gasturbinenanlage wird nachfolgend anhand eines Ausführungsbeispiels in Verbindung mit den Figuren ohne Beschränkung des allgemeinen Erfindungsgedankens nochmals kurz erläutert. Hierbei zeigen:
- Fig. 1: eine schematische Darstellung einer Gasturbinenanlage gemäß der vorliegenden Erfindung;
- Fig. 2: eine schematische Darstellung der Verhältnisse zwischen Air-Intake-Booster und Exhaust-Gas-Booster bzgl. der Abhängigkeit von Leistung und Wirkungsgrad der Gasturbinenanlage von Druckänderungen;
- Fig. 3: ein Beispiel für die Abhängigkeit der relativen Ausgangsleistung einer Gasturbinenanlage von der Umgebungstemperatur; und
- Fig. 4: ein Beispiel für die Abhängigkeit der relativen Ausgangsleistung einer Gasturbinenanlage vom Umgebungsdruck.

### Wege zur Ausführung der Erfindung

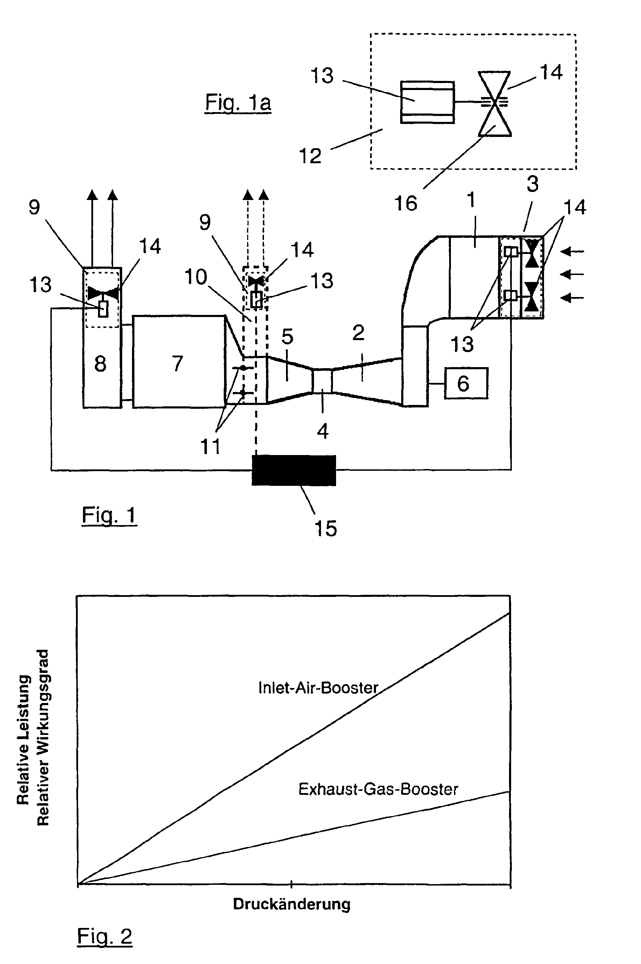

Figur 1 zeigt den grundsätzlichen Aufbau einer Gasturbinenanlage, ohne auf Details, wie den genauen Aufbau des Verdichters, der Turbine, der Brennkammer oder der sonstigen Elemente einer derartigen Anlage einzugehen, die dem Fachmann hinreichend bekannt sind. Weiterhin wird in diesem Beispiel nicht auf den genauen Aufbau des Air-Intake-Boosters oder des Exhaust-Gas-Boosters eingegangen, deren Gestaltungs- und Auslegungsvielfalt in Analogie zu Lüftern ebenfalls der Fachliteratur entnommen werden können.

Im nachfolgenden soll unter einer Gasturbine eine Anlage verstanden werden, bestehend aus einem Verdichter, mindestens einer Brennkammer und mindestens einer Turbine. Eine Gasturbinenanlage schliesst zudem einen Generator zur Stromerzeugung ein.
Unter einer Kombianlage versteht man zunächst die Kopplung eines Gas- und eines Dampfprozesses in Form einer Gasturbinenanlage und einer Dampfturbinenanlage. Die Wärme der Abgase der Turbine der Gasturbinenanlage dient dabei zur Dampferzeugung in einem Abhitzekessel. Der erzeugte Dampf wird mittels der Dampfturbinenanlage zur Stromerzeugung genutzt.

Bei der in der Figur 1 dargestellten Gasturbinenanlage ist im Ansaugkanal 1 des Verdichters 2 eine erste Booster-Stufe (Air-Intake-Booster) 3 angeordnet. Diese erste Booster-Stufe 3 im Ansaugkanal 1 kann in Strömungsrichtung sowohl vor oder auch nach dem Gasturbinen-Luftfiltersystem im Ansaugkanal 1 angeordnet sein. Die erste Booster-Stufe 3 verringert einerseits die Druckverluste über dem gesamten Ansaugkanal 1 der Gasturbinenanlage bzw. erhöht den Ansaugdruck für den Verdichter 2 und erhöht somit den Zuluftmassenstrom. Die erste Booster-Stufe 3 kann andererseits aber auch zu einer Optimierung des gesamten Ansaugkanals 1 im Hinblick auf die Strömungstechnik (z. B. kleinere Querschnitte) und die konstruktive Ausführung (z. B. effizientere Luftfilter) dienen. Durch eine kosten- und raumsparende Bauweise, eine der Anordnungsplanung untergeordnete Führung des Ansaugkanals, effizientere Luftfilter usw. veranlasste Erhöhung der Druckverluste kann durch die Booster-Stufe 3 ausgeglichen werden.

Die über den Verdichter 2 angesaugte Verbrennungsluft wird in einer Brennkammer 4 nach Beimischung des Brennstoffes als Brennstoff-Luft-Gemisch verbrannt und treibt als komprimiertes Heissgas unter Expansion die Gasturbine 5 an. Die von der Gasturbinenanlage, im vorliegenden Fall bestehend aus Verdichter 2, Brennkammer 4 und Turbine 5, abgegebene Nutzleistung dient wiederum zum Antrieb eines Generators 6. Im dargestellten Beispiel ist der Gasturbine 5 ein Abhitzekessel 7 nachgeschaltet, in dem den heissen Abgasen Wärme entzogen und zur Erzeugung von Dampf für eine hier nicht dargestellte Dampfturbinenanlage eingesetzt wird. Im sich anschließenden Abgaskanal 8 ist die zweite wesentliche Komponente des erfindungsgemäßen Systems, die zweite Booster-Stufe (Exhaust-Gas-Booster) 9 angeordnet, welche im vorliegenden Beispiel als ein den Querschnitt des Abgaskanals 8 ausfüllendes grosses Booster-Element 12 ausgebildet ist.

Für einen Betrieb der Gasturbinenanlage unabhängig vom Betrieb des Abhitzekessels 7 kann zwischen Turbine 5 und Abhitzekessel 7 ein Bypass(kamin) 10 angeordnet sein. Über ein Klappensystem 11 können die heissen Abgase der Turbine 5 wahlweise direkt über den abgasseitigen Bypass (Bypasskamin) 10 oder über den Abhitzekessel 7 und den Abgaskanal 8 in die Umgebung abgeleitet werden. Auch im abgasseitigen Bypass 10 kann ein Exhaust-Gas-Booster 9 angeordnet sein. Der gleiche Sachverhalt gilt selbstverständlich für den Fall eines Bypasses 10 auf der Seite des Ansaugkanals 1.

Durch diese zweite Booster-Stufe 9 auf der Austrittsseite des Abhitzekessels 7 wird zunächst der Druckverlust über dem Abgassystem incl. Abhitzekessel 7 reduziert bzw. der Expansionsenddruck der Turbine 5 abgesenkt und somit wiederum die Leistung der Gasturbinenanlage gesteigert. Ferner kann durch diese zweite Booster-Stufe 9 beispielsweise durch eine Erhöhung der Geschwindigkeit der Abgase am Austritt des Abgaskanals 8 eine Vergrösserung des Auftriebs des Abgases erreicht werden. Damit lassen sich in Zeiten ungünstiger bzw. extremer Wetterlagen die Emissionsbedingungen verbessern. Andererseits bietet damit die zweite Booster-Stufe 9 bei gleichen Emissionsbedingungen die Möglichkeit, die Höhe des Abgaskanals 8 zu verringern, sollte dies beispielsweise aus architektonischen Gründen notwendig sein.
In Analogie zum Air-Intake-Booster 3 kann auch der Exhaust-Gas-Booster 9 zu einer konstruktiven und strömungstechnischen Optimierung des gesamten Abgassystems, d. h. des Abhitzekessels und des Abgaskanals, dienen.
Weiterhin kann durch gezielte Steuerung der Booster-Stufen beispielsweise Standort- und Klimaeinflüssen, unterschiedlichen Brennstoffqualitäten, differenzierten Netzanforderungen oder dergleichen Rechnung getragen werden.

In Figur 2 sind die Effekte von erster Booster-Stufe 3 und zweiter Booster-Stufe 9 auf den Wirkungsgrad und die Leistung qualitativ dargestellt. Bei gleicher Druckänderung (Ansaugdruckerhöhung bei Inlet-Air-Booster bzw. Abgasdruckabsenkung bei Exhaust-Gas-Booster) bewirkt die erste Booster-Stufe 3 den deutlich höheren Effekt. Aus diesem Grund ist in Abhängigkeit insbesondere der zu fahrenden Leistung der ersten Booster-Stufe 3 der eindeutige Vorrang zu geben. Der qualitative Unterschied zwischen erster und zweiter Booster-Stufe 3,9 resultiert aus den unterschiedlichen Volumenströmen am Lufteintritt und am Abgasaustritt durch Dichteunterschiede.

Eine jeweilige Booster-Stufe 3,9, d. h. die erste Booster-Stufe 3 - auch als Air-Intake-Booster 3 bezeichnet - und die zweite Booster-Stufe 9 - auch als Exhaust-Gas-Booster 9 bezeichnet -, kann aus einem oder mehreren parallel oder in Reihe zum Ansaugluft- bzw. Abgasstrom geschalteten Booster-Elementen 12 bestehen. Jedes Booster-Element 12 verfügt über einen Antrieb 13 und einen Lüfter 14.

Vorzugsweise werden die Lüfter 14 der Booster-Elemente 12 über drehzahlgeregelte Antriebe 13 angetrieben, wie dies in der Figur 1 schematisch dargestellt ist. Durch diesen drehzahlgeregelten Antrieb 13 lässt sich der Betrieb der Gasturbinenanlage jederzeit optimal sich verändernden Betriebsbedingungen anpassen, um so eine möglichst wirtschaftliche Fahrweise der Anlage zu ermöglichen.
Vorzugsweise enthält das vorliegende System eine entsprechende Steuerung 15 für die drehzahlgeregelten Antriebe 13 der Booster-Elemente 12 beider Booster-Stufen 3,9.

Zur Anpassung des Betriebes der Booster-Stufen 3,9 an die Betriebsbedingungen der Gasturbinenanlage ist es weiterhin vorteilhaft, die Lüfter 14 der Booster-Elemente 12 mit verstellbaren Lüfterblättern 16 auszurüsten (vgl. Fig. 1a).

Desweiteren kann durch den Betrieb der Booster-Stufen 3,9 vor oder während eines Anfahrens der Gasturbinenanlage das Spülen der Gasturbinenanlage, des Abhitzekessels 7 und des Abgaskanals 8 bewirkt bzw. dieser Vorgang unterstützt werden.

Die Booster-Stufen 3,9 können auch während des Abfahrens bzw. der Stillsetzung der Anlage zum Einsatz gelangen. Für ein schnelles Abkühlen der Gasturbinenanlage nach dem Abstellen werden die Booster-Stufen 3 und/oder 9 im Sinne von "Forced Cooling" betrieben. Ein "Forced Cooling" ist somit ohne Einsatz von Anfahrumrichter und Generator möglich.

Die Antriebe (13) der Booster-Elemente (12) werden vorzugsweise als Niederspannungsantriebe ausgelegt und folglich von der Niederspannungsebene aus versorgt. Im Gegensatz zum Anfahrumrichter, welcher von der Mittelspannungsebene gespeist wird, bietet die Niederspannungsversorgung der Booster-Antriebe auch die Möglichkeit eines Betriebes unter den Bedingungen des Netzausfalls. Auch unter "Black-Grid" Situationen ist somit ein Spülen aus sicherheitstechnischen Erfordernissen oder ein "Forced Cooling" möglich.

Die beiden Booster-Stufen 3 bzw. 9 können entweder einzeln oder in Kombination betrieben werden. Beide Booster-Stufen 3,9 dienen primär zur Erhöhung der Leistung und zur Verbesserung des Wirkungsgrades der Gesamtanlage. Beim An- bzw. Abfahren der Anlage aber auch bei Lastwechseln können mittels der Booster-Stufen 3,9 grössere Leistungsgradienten realisiert werden. Die Booster-Stufen 3,9 können jedoch durch Ermöglichung einer schonenden Fahrweise auch eine Erhöhung der Lebensdauer der Anlage bewirken, indem - bei gleichem Leistungsgradienten bzw. gleicher Ausgangsleistung wie ohne Betrieb der Booster-Stufen - durch deren Betrieb eine Temperaturabsenkung in der Gasturbinenanlage entsprechend der durch die Booster-Stufen gewonnenen Mehrleistung ermöglicht wird. Eine solche EOH (Equivalent Operating Hour) verringernde stationäre Fahrweise einer Gasturbinenanlage kann beispielsweise in den Nachtstunden oder an den Wochenenden, d. h. in Zeiten mit sehr niedrigen Brennstoffpreisen, vorteilhaft sein.

Gasturbinenanlagen bieten sich für Aufgaben der Frequenzregelung an. Dies bringt jedoch erhebliche dynamische Belastungen insbesondere für die Bauteile des Heissgaspfades mit sich. Die durch die Frequenzregelung verlangten Leistungsänderungen können nun über eine entsprechende Regelung der ersten und/oder zweiten Booster-Stufe 3,9 erbracht werden.

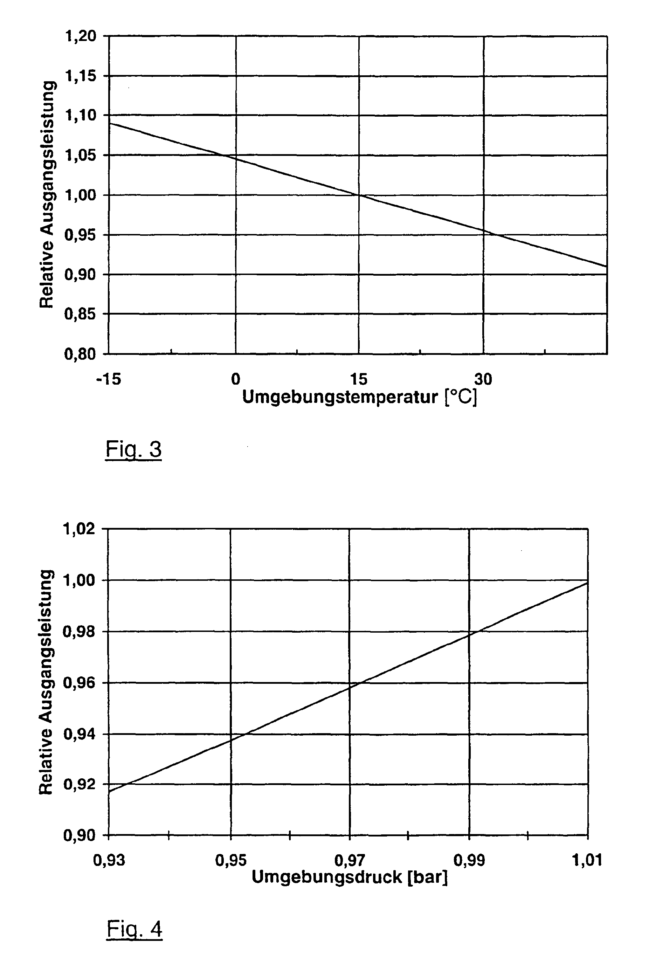

Die Möglichkeit des Ausgleichs unterschiedlicher oder variierender Umgebungsbedindungen mit den beiden Booster-Stufen 3,9 wird anhand der Figuren 3 und 4 ersichtlich. Figur 3 zeigt hierbei den Einfluss der Umgebungstemperatur auf die relative Ausgangsleistung der Gasturbinenanlage unter Volllastbedingungen. In dieser Darstellung ist die Abnahme der relativen Ausgangsleistung der Gasturbinenanlage ersichtlich, wenn die Umgebungstemperatur ansteigt. Durch Zuschalten der Booster-Stufen bei Temperaturerhöhung der Umgebungsluft kann einer derartigen Leistungsverringerung entgegengewirkt werden.

Figur 4 zeigt schließlich die Abhängigkeit der relativen Ausgangsleistung der Gasturbinenanlage unter Volllastbedingungen bei Veränderung des Druckes der Umgebungsluft bedingt durch Wetterbedingungen oder die Aufstellungshöhe. Aus dieser Darstellung ist ersichtlich, dass die relative Ausgangsleistung der Gasturbinenanlage bei Abnahme des Luftdruckes ebenfalls absinkt. Auch dieser Leistungsänderung in Abhängigkeit des Druckes der Umgebungsluft kann durch Zuschalten der Booster-Stufen entgegengewirkt werden.

### BEZUGSZEICHENLISTE

| | |
|---|---|
| 1 | Ansaugkanal |
| 2 | Verdichter |
| 3 | Erste Booster-Stufe (Air-Intake-Booster) |
| 4 | Brennkammer |
| 5 | Gasturbine |
| 6 | Generator |
| 7 | Zwischenelement, Abhitzekessel |
| 8 | Abgaskanal |
| 9 | Zweite Booster-Stufe (Exhaust-Gas-Booster) |
| 10 | Bypass (-kamin, -kanal; ansaugluftseitig, abgasseitig) |
| 11 | Klappensystem |
| 12 | Booster-Element |
| 13 | Antrieb (drehzahlgeregelt) |
| 14 | Lüfter |
| 15 | Steuerung von 13 |
| 16 | Lüfterblatt (verstellbar) |

## Patentansprüche

1. Gasturbinenanlage, mindestens umfassend einen Ansaugkanal (1), einen Verdichter (2), eine Brennkammer (4), eine Gasturbine (5), einen Abgaskanal (8), der sich direkt oder über Zwischenelemente (7) an die Gasturbine (5) anschliesst sowie einen Generator (6) zur Stromerzeugung, wobei in dem Ansaugkanal (1) des Verdichters (2) oder in einem Bypasskanal (10) zu dem Ansaugkanal (1) eine erste Booster-Stufe (3) angeordnet ist,
**dadurch gekennzeichnet,**
**dass** in dem Abgaskanal (8) der Gasturbine (5), oder in einem Bypasskanal (10) zu dem Abgaskanal (8) eine zweite Booster-Stufe (9) angeordnet ist.

2. Gasturbinenanlage nach Anspruch 1,
**dadurch gekennzeichnet,**
**dass** die erste Booster-Stufe (3) und/oder die zweite Booster-Stufe (9) aus einem oder mehreren parallel oder in Reihe angeordneten Booster-Elementen (12) mit Lüftern (14) bestehen.

3. Gasturbinenanlage nach Anspruch 2,
**dadurch gekennzeichnet,**
**dass** die Booster-Elemente (12) Antriebe (13) aufweisen, die als Niederspannungsantriebe ausgelegt sind.

4. Gasturbinenanlage nach Anspruch 2 oder 3,
**dadurch gekennzeichnet,**
**dass** die Lüfter (14) der Booster-Elemente (12) durch einen drehzahlgeregelten Antrieb (13) angetrieben werden.

5. Gasturbinenanlage nach einem der Ansprüche 2 bis 4,
**dadurch gekennzeichnet,**
**dass** die Lüfter (14) der Booster-Elemente (12) mit verstellbaren Lüfterblättern (16) ausgerüstet sind.

6. Gasturbinenanlage nach Anspruch 1 bis 5,
**dadurch gekennzeichnet,**
**dass** zwischen dem Abgaskanal (8) und der Gasturbine (5) ein Wärmerückgewinnungssystem, insbesondere ein Abhitzekessel (7), als Zwischenelement vorgesehen ist.

7. Verfahren zum Betrieb einer Gasturbinenanlage, mindestens umfassend einen Ansaugkanal (1), einen Verdichter (2), eine Brennkammer (4), eine Gasturbine (5), einen Abgaskanal (8), der sich direkt oder über Zwischenelemente (7) an die Gasturbine (5) anschliesst sowie einen Generator (6) zur Stromerzeugung, wobei in dem Ansaugkanal (1) des Verdichters (2) oder in einem Bypasskanal (10) zu dem Ansaugkanal (1) eine erste Booster-Stufe (3) angeordnet ist, nach einem oder mehreren der vorhergehenden Ansprüche,
**dadurch gekennzeichnet,**
**dass** bei einem hohen Leistungsbedarf bzw. bei der Notwendigkeit zur Bereitstellung von Reserveleistung oder bei Notwendigkeit des Betriebes der Gasturbinenanlage zum Zwecke der Frequenzregelung die erste Booster-Stufe (3) und/oder die zweite Booster-Stufe (9) betrieben werden.

8. Verfahren nach Anspruch 7,
**dadurch gekennzeichnet,**
**dass** vor dem Anfahren und/oder während des Anfahrens der Gasturbinenanlage die erste Booster-Stufe (3) und/oder die zweite Booster-Stufe (9) zum Zwecke des Spülens der Anlage betrieben werden.

9. Verfahren nach Anspruch 7,
**dadurch gekennzeichnet,**
**dass** während des Abfahrens und/oder nach dem Abfahren der Gasturbinenanlage die erste Booster-Stufe (3) und/oder die zweite Booster-Stufe (9) zum Zwecke des Kühlens der Anlage betrieben werden.

10. Verfahren nach Anspruch 7,
**dadurch gekennzeichnet,**
**dass** während des Anfahrens bzw. während einer Leistungssteigerung der Gasturbinenanlage die erste Booster-Stufe (3) und/oder die zweite Booster-Stufe (9) zum Zwecke der Realisierung eines erhöhten Leistungsgradienten der Anlage betrieben wird.

11. Verfahren nach Anspruch 7,
**dadurch gekennzeichnet,**
**dass** während des Anfahrens bzw. während einer Leistungssteigerung der Gasturbinenanlage die erste Booster-Stufe (3) und/oder die zweite Booster-Stufe (9) zum Zwecke eines schonenderen Betriebes der Anlage bei gleichem Leistungsgradienten wie ohne Betrieb der Booster-Stufen (3,9) betrieben werden.

12. Verfahren nach Anspruch 7,
**dadurch gekennzeichnet,**
**dass** bei Betrieb der ersten Booster-Stufe (3) und/oder der zweiten Booster-Stufe (9) die Feuerungsleistung zurückgenommen wird, um die gleiche Ausgangsleistung der Gasturbinenanlage bereitzustellen wie ohne Betrieb der ersten Booster-Stufe (3) und/oder der zweiten Booster-Stufe (9).

13. Verfahren nach Anspruch 7,
**dadurch gekennzeichnet,**
**dass** bei Notwendigkeit der Verbesserung der Emissionsbedingungen die zweite Booster-Stufe (9) zur Erhöhung der Austrittsgeschwindigkeit und damit des Auftriebs der aus dem Abgaskanal (8) ausströmenden Abgase betrieben wird.

## Claims

1. Gas turbine plant, at least comprising an intake duct (1), a compressor (2), a combustion chamber (4), a gas turbine (5), an exhaust-gas duct (8) which follows the gas turbine (5) directly or via intermediate elements (7), and a generator (6) for current generation, a first booster stage (3) being arranged in the intake duct (1) of the compressor (2) or in a bypass duct (10) to the intake duct (1), **characterized in that** a second booster stage (9) is arranged in the exhaust-gas duct (8) of the gas turbine (5) or in a bypass duct (10) to the exhaust-gas duct (8).

2. Gas turbine plant according to Claim 1,
**characterized in that** the first booster stage (3) and/or the second booster stage (9) consist/consists of one or more parallel-arranged or series-arranged booster elements (12) with fans (14).

3. Gas turbine plant according to Claim 2,
**characterized in that** the booster elements (12) have drives (13) which are designed as low-voltage drives.

4. Gas turbine plant according to Claim 2 or 3, **characterized in that** the fans (14) of the booster elements (12) are driven by a variable-speed drive (13).

5. Gas turbine plant according to one of Claims 2 to 4, **characterized in that** the fans (14) of the booster elements (12) are equipped with adjustable fan blades (16).

6. Gas turbine plant according to Claims 1 to 5, **characterized in that** a heat recovery system, in particular a waste-heat recovery boiler (7), is provided as an intermediate element between the exhaust-gas duct (8) and the gas turbine (5).

7. Method for operating a gas turbine plant, at least comprising an intake duct (1), a compressor (2), a combustion chamber (4), a gas turbine (5), an exhaust-gas duct (8) which follows the gas turbine (5) directly or via intermediate elements (7), and a generator (6) for current generation, a first booster stage (3) being arranged in the intake duct (1) of the compressor (2) or in a bypass duct (10) to the intake duct (1), according to one or more of the preceding claims, **characterized in that,** in the case of a high power demand or if there is a need for the provision of reserve power or if there is a need for operating the gas turbine plant for the purpose of frequency regulation, the first booster stage (3) and/or the second booster stage (9) are/is operated.

8. Method according to Claim 7, **characterized in that,** before the start-up and/or during the start-up of the gas turbine plant, the first booster stage (3) and/or the second booster stage (9) are/is operated for the purpose of scavenging the plant.

9. Method according to Claim 7, **characterized in that**, during the shutdown and/or after the shutdown of the gas turbine plant, the first booster stage (3) and/or the second booster stage (9) are operated for the purpose of cooling the plant.

10. Method according to Claim 7, **characterized in that**, during the start-up or during a power increase of the gas turbine plant, the first booster stage (3) and/or the second booster stage (9) are operated for the purpose of implementing a raised power gradient of the plant.

11. Method according to Claim 7, **characterized in that,** during the start-up or during a power increase to the gas turbine plant, the first booster stage (3) and/or the second booster stage (9) are/is operated for the purpose of a more careful operation of the plant at the same power gradient as is present without the operation of the booster stages (3, 9).

12. Method according to Claim 7, **characterized in that** when the first booster stage (3) and/or the second booster stage (9) are/is operated, the firing power is cut back, in order to provide the same output power of the gas turbine plant as is present without the operation of the first booster stage (3) and/or of the second booster stage (9).

13. Method according to Claim 7, **characterized in that**, when there is a need for improving the emission conditions, the second booster stage (9) is operated in order to raise the outlet velocity and therefore the lift of the exhaust gases flowing out of the exhaust-gas duct (8).

## Revendications

1. Installation de turbine à gaz, comprenant au moins un canal d'admission (1), un compresseur (2), une chambre de combustion (4), une turbine à gaz (5), un canal d'échappement (8), qui se raccorde directement ou par le biais d'éléments intermédiaires (7) à la turbine à gaz (5), ainsi qu'un générateur (6) pour la production de courant, un premier étage de suralimentation (3) étant disposé dans le canal d'admission (1) du compresseur (2) ou dans un canal de dérivation (10) allant au canal d'admission (1),
**caractérisée en ce que**
l'on prévoit un deuxième étage de suralimentation (9) dans le canal d'échappement (8) de la turbine à gaz (5), ou dans un canal de dérivation (10) allant au canal d'échappement (8).

2. Installation de turbine à gaz selon la revendication 1,
**caractérisée en ce que**
le premier étage de suralimentation (3) et/ou le deuxième étage de suralimentation (9) se composent d'un ou de plusieurs éléments de suralimentation (12) montés en parallèle ou en série, avec des ventilateurs (14).

3. Installation de turbine à gaz selon la revendication 2,
**caractérisée en ce que**
les éléments de suralimentation (12) présentent des entraînements (13) qui sont conçus sous forme d'entraînements basse tension.

4. Installation de turbine à gaz selon la revendication 2 ou 3,
**caractérisée en ce que**
les ventilateurs (14) des éléments de suralimentation (12) sont entraînés par un entraînement (13) à régulation de régime.

5. Installation de turbine à gaz selon l'une quelconque des revendications 2 à 4,
**caractérisée en ce que**
les ventilateurs (14) des éléments de suralimentation (12) sont équipés de pales de ventilateurs réglables (16).

6. Installation de turbine à gaz selon les revendications 1 à 5,
**caractérisée en ce**
**qu'**entre le canal d'échappement (8) et la turbine à gaz (5) est prévu un système de recirculation de chaleur, notamment une chaudière à chaleur perdue (7), en tant qu'élément intermédiaire.

7. Procédé pour faire fonctionner une installation de turbine à gaz, comprenant au moins un canal d'admission (1), un compresseur (2), une chambre de combustion (4), une turbine à gaz (5), un canal d'échappement (8), qui se raccorde directement ou par le biais d'éléments intermédiaires (7) à la turbine à gaz (5), ainsi qu'un générateur (6) pour la production de courant, un premier étage de suralimentation (3) étant disposé dans le canal d'admission (1) du compresseur (2) ou dans un canal de dérivation (10) allant au canal d'admission (1), selon l'une quelconque ou plusieurs des revendications précédentes,
**caractérisé en ce que**
dans le cas d'un grand besoin d'énergie ou lorsqu'il faut fournir une puissance de réserve ou lorsqu'il faut faire fonctionner l'installation de turbine à gaz afin de réguler la fréquence, le premier étage de suralimentation (3) et/ou le deuxième étage de suralimentation (9) sont utilisés.

8. Procédé selon la revendication 7,
**caractérisé en ce que**
avant la mise en marche et/ou pendant la mise en marche de l'installation de turbine à gaz, le premier étage de suralimentation (3) et/ou le deuxième étage de suralimentation (9) sont utilisés pour rincer l'installation.

9. Procédé selon la revendication 7,
**caractérisé en ce que**
pendant le démarrage et/ou après le démarrage de l'installation de turbine à gaz, le premier étage de suralimentation (3) et/ou le deuxième étage de suralimentation (9) sont utilisés pour refroidir l'installation.

10. Procédé selon la revendication 7,
**caractérisé en ce que**
pendant la mise en marche ou pendant une augmentation de la puissance de l'installation de turbine à gaz, le premier étage de suralimentation (3) et/ou le deuxième étage de suralimentation (9) sont utilisés pour réaliser un gradient de puissance accru de l'installation.

11. Procédé selon la revendication 7,
**caractérisé en ce que**
pendant la mise en marche ou pendant une augmentation de la puissance de l'installation de turbine à gaz, le premier étage de suralimentation (3) et/ou le deuxième étage de suralimentation (9) sont utilisés pour assurer un fonctionnement doux de l'installation, avec le même gradient de puissance que lorsque les étages de suralimentation (3, 9) ne sont pas utilisés.

12. Procédé selon la revendication 7,
**caractérisé en ce que**
pendant le fonctionnement du premier étage de suralimentation (3) et/ou du deuxième étage de suralimentation (9), la puissance de combustion est réduite afin de fournir la même puissance de sortie de l'installation de turbine à gaz que dans le cas où le premier étage de suralimentation (3) et/ou le deuxième étage de suralimentation (9) ne sont pas utilisés.

13. Procédé selon la revendication 7,
**caractérisé en ce que**
lorsqu'il est nécessaire d'améliorer les conditions d'émission, le deuxième étage de suralimentation (9) est utilisé pour augmenter la vitesse de sortie et donc la poussée des gaz d'échappement sortant du canal d'échappement (8).
